# EUROPÄISCHE PATENTSCHRIFT

(11) **EP 0 705 187 B1**
(45) Veröffentlichungstag und Bekanntmachung des Hinweises auf die Patenterteilung: **20.01.1999**
(21) Anmeldenummer: 94923699.6
(22) Anmeldetag: 29.06.1994
(51) Int. Cl.: B60S 1/24

(54) **ANTRIEBSKURBEL EINER SCHEIBENWISCHERANLAGE**
DRIVING CRANK FOR A WINDSHIELD WIPER SYSTEM
MANIVELLE D'ENTRAINEMENT POUR UN SYSTEME D'ESSUIE-GLACES

(30) Priorität: 05.07.1993 DE 4322297
(43) Veröffentlichungstag der Anmeldung: 10.04.1996
(73) Patentinhaber: ITT Automotive Europe GmbH, 60488 Frankfurt am Main (DE)
(72) Erfinder: EGNER-WALTER, Bruno, D-74076 Heilbronn (DE)
(86) Internationale Anmeldenummer: EP9402116
(87) Internationale Veröffentlichungsnummer: WO9501894

(56) Entgegenhaltungen:
- DE-A- 2 406 506
- DE-A- 3 643 474
- FR-A- 2 356 542
- FR-A- 2 550 287
- GB-A- 2 088 707
- GB-A- 2 117 630

## Beschreibung

Die Erfindung betrifft eine Antriebskurbel einer Scheibenwischeranlage, die einerseits mit einer Welle und andererseits mit einem Wischergestänge verbindbar ist und die durch Tiefziehen aus einem Blech hergestellt ist.

Eine solche Antriebskurbel ist bereits aus der DE-OS 34 28 796 bekannt. Diese Antriebskurbel wird gebildet von einem Blechteil, dessen Ränder umlaufend etwa rechtwinklig umgebogen sind. In diese Kurbel ist eine Öffnung eingebracht, deren Rand nach der gleichen Seite wie der umlaufende Rand hindurchgezogen ist und einen Innenkonus bildet. Dieser Innenkonus verjüngt sich ausgehend vom Rücken der Antriebskurbel in Richtung des durchgezogenen Randes. Der Innenkonus dient der Befestigung der Antriebskurbel auf einer Welle, die an ihrem Ende mit einem Außengewinde und davor mit einem Außenkonus versehen ist, der sich in Richtung zum Wellenende hin verjüngt. Zur Befestigung der Antriebskurbel auf der Welle ist die Aritriebskurbel mit dem Innenkonus auf den Außenkonus der Welle aufgepreßt, wobei das Wellenende die Aritriebskurbel durchdringt und auf den Gewindebereich, der auf der Seite des Durchzuges aus der Antriebskurbel hervorsteht, eine Mutter aufgebracht ist. Um eine möglichst sichere Verbindung für die Kraftübertragung herzustellen, muß das Aufpressen der Antriebskurbel mit großer Kraft erfolgen. Da aber gerade dort das Material am schwächsten ist, wo in diesem Fall die größte Befestigungskraft aufgebracht wird, nämlich im Bereich des äußeren Randes des Innenkonus im Antriebshebel, sind zusätzliche Mittel vorgesehen, die ein Aufweiten der Wand des Innenkonus verhindern sollen. Diese Mittel sind verschieden geformte Ringe, die den Bereich des Innenkonus von außen umfassen und damit den hindurchgezogenen Rand der Öffnung gegen Aufweiten schützen sollen.

Trotz dieser zusätzlichen Mittel, die zu höherem Montageaufwand und zu höheren Kosten führen, ist bei einem solchen Antriebshebel eine sichere Drehmomentübertragung nicht gewährleistet, da bei den hohen Verspannungskräften eine unerwünschte Materialverformung des den Innenkonus bildenden durchgezogenen Randes nicht verhindert werden kann.

Die Ahtriebskurbel gemäß DE-OS 34 28 796 weist an dem der Öffnung mit dem Innenkonus gegenüberliegenden Ende eine weitere Öffnung auf, in der ein Kugelbolzen zum Verbinden mit einer Gelenkstange befestigt ist. Der Rand dieser Öffnung ist zunächst in die gleiche Richtung wie der Durchzug für den Innenkonus und der Rand der Antriebskurbel umgebogen und dann anschließend in die Gegenrichtung umgestülpt, so daß der Durchzug für die Befestigung des Kurbelbolzens im wesentlichen in die entgegengesetzte Richtung verläuft. Die Herstellung derartig komplizierter Formen an einer solchen Antriebskurbel erfordert einen erhöhten technischen bzw. technologischen Aufwand, der mit entsprechend höheren Kosten verbunden ist.

Bei einer Antriebskurbel nach DE-OS 36 43 474 ist zum Verhindern des Aufweitens des von einem durchgezogenen Rand gebildeten Innenkonus die Befestigungsmutter mit einem Bund ausgestattet, der den durchgezogenen Rand hintergreift. Gegenüber der Lösung nach DE-OS 34 28 796 ist zwar eine Vereinfachung des Montageaufwandes wegen Wegfalls zusätzlicher Einzelteile zu verzeichnen, aber die großen Verspannungskräfte verformen nach wie vor den durchgezogenen Rand der Öffnung. Es kommt zu einem unkontrollierbaren Materialfluß. Dieser Materialfluß erlaubt einerseits, daß sich die Antriebskurbel auf der Welle lockern kann. Andererseits kann Material in Zwischenräume zwischen Welle und Befestigungsmutter bis hin in die Gewindegänge eindringen. Dadurch ist einerseits eine sichere Drehmomentsübertragung nicht gewährleistet, andererseits wird eine eventuell erforderliche Demontage der Verbindung erheblich erschwert oder gar unmöglich gemacht.

Aufgabe der Erfindung ist es, eine durch Tiefziehen aus Blech kostengünstig hergestellte Antriebskurbel einer Scheibenwischeranlage zu entwickeln, die eine einfach realisierbare Verbindung ohne zusätzliche Abstützmittel ermöglicht, die sicher die erforderlich großen Drehmomente übertragen kann und die im Bedarfsfall zerstörungsfrei demontierbar ist.

Erfindungsgemäß wird die Aufgabe durch eine Antriebskurbel mit den Merkmalen des Oberbegriffs des Anspruchs 1 gelöst, bei der sich der Innenkonus zur Befestigung der Antriebskurbel auf dem Außenkonus einer Welle vom Rückenteil des Kurbelhebels, auf dessen Außenseite die Befestigungsmutter aufliegt, ausgehend erweitert und wobei der Rand der Öffnung zur Befestigung des Kugelbolzens nach der gleichen Seite des Rückenteiles hin umgebogen bzw. herumgezogen ist wie der umlaufende Rand des Rückenteil und der Rand der Öffnung zur Bildung des Innenkonus an dem einen Ende des Kurbelhebels.

Mit anderen Worten ausgedrückt, befindet sich der kleinere Querschnitt des Innenkonus im Rückenteil des Kurbelhebels, und der größere Querschnitt des Innenkonus befindet sich am Ende des herumgezogenen Randes dieser Öffnung. Die Antriebskurbel wird also hinsichtlich des den Innenkonus bildenden Durchzuges im Vergleich zur DE-OS 34 28 796 und DE-OS 36 43 474 um 180° gewendet auf einer Welle befestigt.

Beim Aufpressen des Innenkonus wird die größte Kraft im engen Bereich des Innenkonus auf den Außenkonus der Welle übertragen. Da dieser Bereich aber im Bereich der Blechstärke des Rückenteils liegt, besteht keine Gefahr des Aufweitens des Innenkonus. Es erfolgt eine Abstützung durch das den engen Teil des Innenkonus umgebende Material des Rückenteils. Es sind also keine zusätzlichen Abstützmittel in Form zusätzlicher Bauteile oder einer besonders geformten Befestigungsmutter erforderlich, um das Aufweiten des Innenkonus in dem am stärksten beanspruchten Bereich zu verhindern. Da außerdem die Befestigungsmutter bzw. eine einfache Unterlegscheibe satt und flächig auf der Außenseite des Kurbelhebels aufliegen kann, werden die Anpreßkräfte auf einer großen Fläche übertragen. Durch diese Kraftverteilung wird ein Materialfließen, welches zum Verstemmen der Antriebskurbel auf der Welle oder zum Verstemmen der Befestigungsmutter auf dem Gewinde der Welle führen könnte, verhindert. Dadurch wird ermöglicht, daß die Antriebskurbel im Bedarfsfall ohne Zerstörungen von der Welle demontiert werden kann. Trotzdem ist die Verspannkraft im Konusbereich so groß, daß eine sichere Drehmomentübertragung gewährleistet ist.

Dadurch daß der Rand der Öffnung zur Befestigung des Kugelbolzens ausschließlich in die gleiche Richtung umgebogen bzw. herumgezogen ist, wie der Rand des Kurbelhebels und der Rand zur Bildung des Innenkonus, ist der Kurbelhebel kostengünstig in nur einem einzigen Tiefzieh-Arbeitsgang herstellbar. Außerdem ist eine besonders feste Verbindung zwischen Kurbelhebel und Kugelbolzen herstellbar, weil in diesem Fall der Kugelbolzen sehr tief in die Öffnung eingesteckt werden kann und eine ziemlich große Verbindungsfläche zwischen Kugelbolzen und Kurbelhebel existiert.

Die Öffnung am anderen Ende des Kurbelhebels, in welcher ein Kugelbolzen zum Anlenken des Wischergestänges befestigt ist, kann vorteilhaft gemäß der Ansprüche 2 bzw. 3 einen kreisrunden bzw. von der Kreisform abweichenden Querschnitt haben. Ein kreisrunder Querschnitt ist zumeist einfacher herstellbar, ein von der Kreisform abweichender Querschnitt hingegen bietet eine größere Sicherheit gegen Verdrehen.

Vorteilhafte Gewichts- und Materialeinsparungen sind erreichbar, wenn der Kurbelhebel nach Anspruch 6 entsprechend seiner mechanischen Beanspruchung im Bereich der den Innenkonus bildenden Öffnung breiter und im Bereich der Kugelbolzenbefestigung schmaler ist und sich im Zwischenbereich kontinuierlich oder stufenartig, natürlich unter Vermeidung scharfer Kanten, verjüngt.

Nach Anspruch 7 kann der Kurbelhebel zur Material- und Gewichtseinsparung in Bereichen ohne oder mit nur geringer mechanischer Beanspruchung Durchbrüche oder Materialdickenverringerungen aufweisen.

Weitere Merkmale und Vorteile sind in den nachfolgenden Ausführungsbeispielen enthalten, die anhand der Zeichnungen beschrieben werden. In den Zeichnungen zeigen:
- Figur 1: eine Antriebskurbel in Schnittdarstellung,
- Figur 2: eine Draufsicht auf eine Antriebskurbel,
- Figur 3: eine Befestigung einer Antriebskurbel auf einer Welle (vergrößerter Ausschnitt) in teilweise geschnittener Darstellung,
- Figur 4: eine Ausführung eines Kurbelhebels in Schnittdarstellung,
- Figur 5: eine Draufsicht auf den Kurbelhebel in Fig. 4 und
- Figur 6: eine Draufsicht auf eine Ausführung eines Kurbelhebels,
wobie die Ausführungen nach dem Figuren 4 bis 6 nicht der Erfindung gehören.

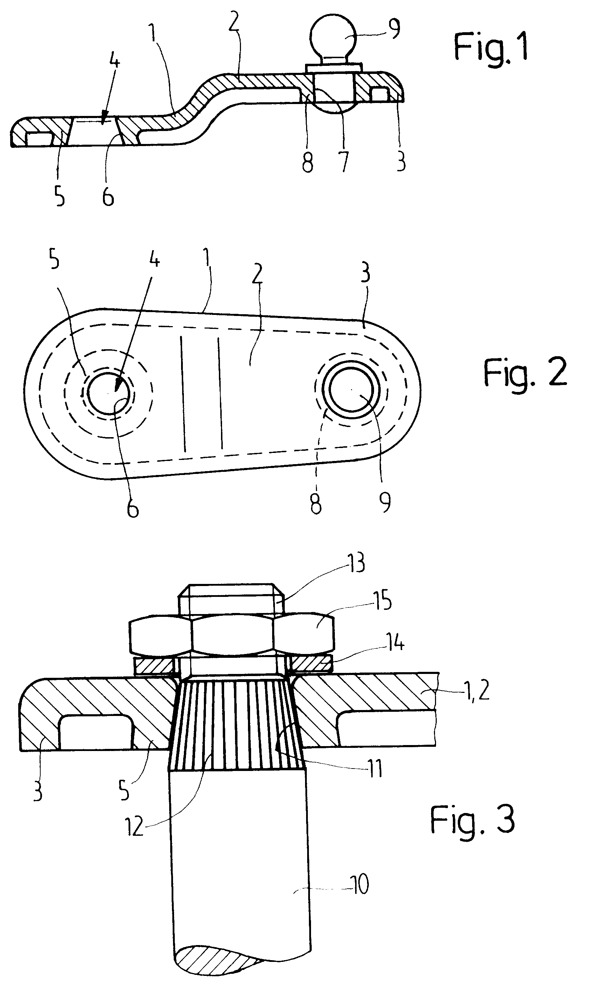

Die in den Figuren 1 und 2 dargestellte Antriebskurbel einer Scheibenwischeranlage ist durch Tiefziehen aus verzinktem Stahlblech hergestellt. Die Verwendung verzinkten Stahlblechs als Ausgangsmaterial hat den Vorteil, daß nachträgliche aufwendige Korrosionsschutzmaßnahmen unterbleiben können. Die Antriebskurbel besteht aus einem Kurbelhebel 1, der ein Rückenteil 2 und einen umlaufenden nach einer Seite des Kurbelhebels 1 herumgezogenen Rand 3 besitzt. An dem einen Ende (in den Zeichnungen am linken Ende) hat der Kurbelhebel eine Öffnung 4. Der Rand 5 dieser Öffnung 4 ist nach der gleichen Seite des Kurbelhebels 1 herumgezogen wie der umlaufende Rand 3 und bildet einen Innenkonus 6. Vom Rückenteil 2 ausgehend erweitert sich der Innenkonus 6. In den Figuren 1, 3 und 4 erweitert sich der Innenkonus 6 von oben nach unten, sein kleinster Querschnitt ist im Rückenteil 2 und sein größter Querschnitt unten am Rand 5.

Am anderen Ende des Kurbelhebels 1 (in den Zeichnungen am rechten Ende) ist eine weitere Öffnung 7 zu sehen, deren Rand 8 nach der gleichen Seite herumgezogen ist wie der Rand 5 und der umlaufende Rand 3. In dieser Öffnung 7 ist ein Kugelbolzen 9 befestigt, wobei die Befestigung durch Vernieten oder Verstemmen bewirkt wurde. Durch den herumgezogenen Rand 8 ist eine relativ große Einstecklänge für den Kugelbolzen 9 in die Öffnung 7 möglich, wodurch eine sehr feste und sichere Verbindung zwischen Kugelbolzen 9 und Kurbelhebel 1 herbeizuführen ist. Aus Figur 1 und 2 ist außerdem noch ersichtlich, daß der Kurbelhebel 1 im Bereich zwischen der Öffnung 4 und der Öffnung 7 abgekröpft ist. Figur 2 zeigt zusätzlich noch, daß zur Erhöhung der mechanischen Festigkeit der Kurbelhebel 1 im Bereich der Öffnung 4 breiter ist als im Bereich der Öffnung 7 und daß sich der Kurbelhebel 1 dazwischen kontinuierlich verjüngt.

In Figur 3 ist besonders deutlich die Befestigung einer Antriebskurbel auf einer Welle 10 dargestellt. Die Welle 10 ist an ihrem oberen Ende, welches von der Antriebskurbel in der Öffnung 4 durchdrungen wird, mit einem Außenkonus 11 ausgestattet, in dessen Mantelfläche eine Riffelung 12 in Richtung der Mantellinien eingebracht ist. Der Kurbelhebel 1 ist mit dem Innenkonus 6 auf den Außenkonus 11 der Welle 10 aufgepreßt. Aus der Öffnung 4 steht das mit Außengewinde 13 versehene Ende der Welle 10 hervor und überragt das Rückenteil 2. Nach Zwischenlegen einer einfachen Unterlegscheibe 14 ist auf das Außengewinde 13 des Wellenendes eine Mutter 15 aufgeschraubt.

Mit dieser Befestigung der Antriebskurbel auf einer Welle 10 ist es möglich, große Aufpreßkräfte anzuwenden ohne die Gefahr, den Innenkonus 6 an seiner gefährlichsten Stelle aufaufzuweiten oder durch Materialverformunq bzw. Materialfluß im Bereich des Innenkonus 6 den Kurbelhebel 1 und/oder die Mutter 15 unlosbar auf der Welle 10 zu verstemmen. Eine derart feste Preßverbindung erlaubt es, sicher große Drehmomente zwischen Welle 10 und Antriebskurbel bzw. umgekehrt zu übertragen.

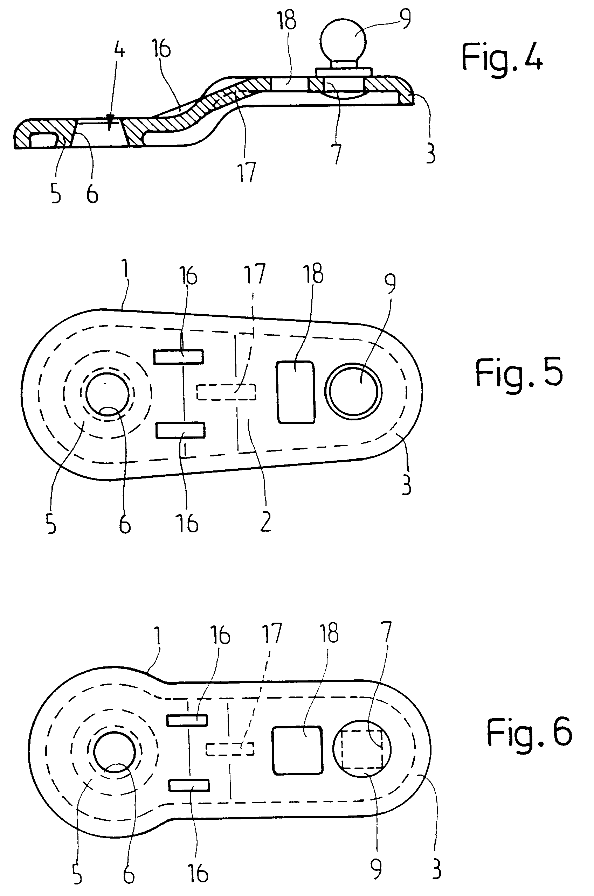

In den Figuren 4 bis 6 sind Antriebskurbeln dargestellt, die nicht der Erfindung gemäß Patentanspruch 1 entsprechen, weil die Öffnung 7 für den Kugelbolzen 9 hier nicht den herumgezogenen Rand 8 aufweist. Jedoch sind in den Figuren 4 bis 6 andere, in den Unteransprüchen enthaltene Merkmale gezeigt, die als vorteilhafte Ausgestaltungen bei der Erfindung einsetzbar sind.

Bei der in den Figuren 4 und 5 dargestellten Antriebskurbel ist der Kurbelhebel 1 im Bereich der Abkröpfung mit zusätzlichen Sicken 16 an der Oberseite des Rückenteils 2 und einer Sicke 17 an der Unterseite des Rückenteils 2 versehen. Diese Mittel, die stabilitätserhöhend wirken, sind an sich bekannt und müssen deshalb nicht näher erläutert werden. Außerdem ist in den Rückenteil 2 des Kurbelhebels 1 in einer Zone ohne oder mit nur geringer mechanischer Belastung zur weiteren Gewichtsreduzierung ein Durchbruch 18 eingebracht.

In Figur 5 ist zu sehen, daß sich die Breite des Kurbelhebels 1 von links nach rechts kontinuierlich verringert.

Bei dem Kurbelhebel 1 in Figur 6 dagegen gibt es im Bereich der Öffnung 6 eine stufenartige Verringerung der Breite des Kurbelhebels 1, in deren Anschluß die beiden Längsseiten des Kurbelhebels 1 dann im gleichen Abstand voneinander, also parallel, verlaufen.

An den Kugelbolzen 9 ist in allen beschriebenen Fällen ein Wischergestänge einer Scheibenwischeranlage anlenkbar.

## Patentansprüche

1. Antriebskurbel einer Scheibenwischeranlage bestehend aus einem durch Tiefziehen aus Blech hergestellten Kurbelhebel (1) mit einem Rückenteil (2) mit herumgezogenem umlaufenden Rand (3), mit einer Öffnung (4) an einem Ende des Kurbelhebels (1), deren Rand (5) zur Bildung eines Innenkonus (6) vom Rückenteil (2) nach derselben Seite hin herumgezogen ist wie der umlaufende Rand (3) des Rückenteiles (2), wobei zur drehfesten Befestigung der Antriebskurbel auf einem Wellenende der an dem einen Ende des Kurbelhebels (1) gebildete Innenkonus (6) auf einen Außenkonus am Wellenende aufgepreßt und durch eine Befestigungsmutter (15) gesichert ist, welche auf das Wellenende aufgeschraubt ist und auf einem Teil des Kurbelhebels (1) aufliegt, und mit einer Öffnung (7) am anderen Ende des Kurbelhebels (1), in welcher ein Kugelbolzen (9) befestigt ist, dadurch **gekennzeichnet**, daß sich der Innenkonus (6) vom Rückenteil (2) des Kurbelhebels (1), auf dessen Außenseite die Befestigungsmutter (15) aufliegt, ausgehend erweitert und daß der Rand (8) der Öffnung (7) zur Befestigung des Kugelbolzens (9) nach der gleichen Seite des Rückenteiles (2) hin umgebogen bzw. herumgezogen ist wie der umlaufende Rand (3) des Rückenteiles (2) und der Rand (5) der Öffnung (4) zur Bildung des Innenkonus (6) an einem Ende des Kurbelhebels (1).

2. Antriebskurbel einer Scheibenwischeranlage nach Anspruch 1, dadurch **gekennzeichnet**, daß die Öffnung (7) zur Befestigung eines Kugelbolzens (9) einen kreisförmigen Querschnitt hat.

3. Antriebskurbel einer Scheibenwischeranlage nach Anspruch 1, dadurch **gekennzeichnet**, daß die Öffnung (7) zur Befestigung eines Kugelbolzens (9) einen von der Kreisform abweichenden Querschnitt hat.

4. Antriebskurbel einer Scheibenwischeranlage nach einem der vorhergehenden Ansprüche, dadurch **gekennzeichnet**, daß der Kurbelhebel (1) im Bereich zwischen den Öffnungen (4, 7) an seinem einen Ende und an seinem anderen Ende abgekröpft ist.

5. Antriebskurbel einer Scheibenwischeranlage nach Anspruch 6, dadurch **gekennzeichnet**, daß der Kurbelhebel (1) im Bereich der Abkröpfung mit Versteifungsrippen/Sicken (16, 17) ausgestattet ist.

6. Antriebskurbel einer Scheibenwischeranlage nach einem der vorhergehenden Ansprüche, dadurch **gekennzeichnet**, daß der Kurbelhebel (1) im Bereich der Öffnung (4) an seinem einen Ende breiter ist als im Bereich der Öffnung (7) an seinem anderen Ende und sich im Zwischenbereich kontinuierlich oder stufenartig verjüngt.

7. Antriebskurbel einer Scheibenwischeranlage nach einem der vorhergehenden Ansprüche, dadurch **gekennzeichnet**, daß der Kurbelhebel (1) in solchen Bereichen, die keinen oder nur geringen mechanischen Spannungen ausgesetzt sind, Materialdickenverringerungen oder Durchbrüche (18) aufweist.

8. Scheibenwischeranlage mit einer Antriebskurbel nach einem der vorhergehenden Ansprüche.

## Claims

1. Driving crank for a windshield wiper system comprising: a crank lever (1) made of deep-drawn sheet metal, including a rear part (2) with a beaded circumferential edge (3), an opening (4) at one end of the crank lever (1) having its edge (5) beaded from the rear part (2) towards the same side as the circumferential edge (3) so as to form an inner cone (6), wherein for the unrotatable attachment of the driving crank on one shaft end the inner cone (6) formed on one end of the crank lever (1) is pressed onto an outer cone on the shaft end and is fastened by a fastening nut (15) which is screwed to the shaft end and abuts on a part of the crank lever (1), and including an opening (7) at the other end of the crank lever (1) in which a ball pin (9) is attached, **characterized** in that the inner cone (6) expands starting from the rear part (2) of the crank lever (1), on the outside of which the fastening nut (15) abuts, and in that the edge (8) of the opening (7) for attaching the ball pin (9) is bent or beaded towards the same side of the rear part (2) as the circumferential edge (3) of the rear part (2) and the edge (5) of the opening (4) for forming the inner cone (6) at one end of the crank lever (1).

2. Driving crank for a windshield wiper system as claimed in claim 1,
**characterized** in that the opening (7) for attaching a ball pin (9) has a circular cross-section.

3. Driving crank for a windshield wiper system as claimed in claim 1,
**characterized** in that the opening (7) for attaching a ball pin (9) has a cross-section of a shape other than circular.

4. Driving crank for a windshield wiper system as claimed in any one of the preceding claims,
**characterized** in that the crank lever (1) is offset in the area between the openings (4, 7) at its one end and at its other end.

5. Driving crank for a windshield wiper system as claimed in claim 6,
**characterized** in that the crank lever (1) has reinforcing ribs or depressions (16, 17) in the area of the offset.

6. Driving crank for a windshield wiper system as claimed in any one of the preceding claims,
**characterized** in that the crank lever (1) is wider in the area of the opening (4) at its one end than in the area of the opening (7) at its other end, and tapers continuously or step-like in the area inbetween.

7. Driving crank for a windshield wiper system as claimed in any one of the preceding claims,
**characterized** in that the crank lever (1) has a reduced material thickness or apertures (18) in those areas without mechanical stress or subjected to only low mechanical stress.

8. Driving crank for a windshield wiper system as claimed in any one of the preceding claims.

## Revendications

1. Manivelle d'entraînement pour système d'essuie-glace, constituée d'un levier de manivelle (1), réalisé par emboutissage dans une tôle, qui comprend une partie de dos (2) présentant un bord périphérique (3) repoussé qui en fait tout le tour, une ouverture (4) située à une première extrémité du levier de manivelle (1), dont un bord (5) servant à former à cône intérieur (6) est repoussé à partir de la partie de dos (2) du même côté que le bord périphérique (3) de la partie de dos (2), de sorte que, pour le calage de la manivelle d'entraînement sur une extrémité d'arbre, le cône intérieur (6) formé à la première extrémité du levier de manivelle (1) est emboîté sous pression sur un cône extérieur situé à l'endroit de l'extrémité d'arbre et est immobilisé au moyen d'un écrou de fixation (15) qui est vissé sur l'extrémité d'arbre et est en appui sur une partie du levier de manivelle (1), et une ouverture (7), située à l'autre extrémité du levier de manivelle (1), dans laquelle un boulon à rotule (9) est fixé, caractérisée en ce que le cône intérieur (6) s'évase en partant de la partie de dos (2) du levier de manivelle (1) sur la face extérieure de laquelle l'écrou de fixation (15) prend appui et en ce que le bord (8) de l'ouverture (7) servant à la fixation du boulon à rotule (9) est replié, plus précisément repoussé, du même côté de la pièce de dos (2) que le bord périphérique (3) de la partie de dos (2) et le bord (5) de l'ouverture (4) servant à former le cône intérieur (6) à la première extrémité du levier de manivelle (1).

2. Manivelle d'entraînement pour système d'essuie-glace suivant la revendication 1, caracrérisée en ce que l'ouverture (7) servant à la fixation d'un boulon à rotule (9) a une section circulaire.

3. Manivelle d'entraînement pour système d'essuie-glace suivant la revendication 1, caractérisée en ce que l'ouverture (7) servant à la fixation d'un boulon à rotule (9) a une section s'écartant de la forme circulaire.

4. Manivelle d'entraînement pour système d'essuie-glace suivant l'une des revendications précédentes, caractérisée en ce que le levier de manivelle (1) est coudé et contre-coudé dans la zone se trouvant entre les ouvertures (4, 7) situées à sa première extrémité et à son autre extrémité.

5. Manivelle d'entraînement pour système d'essuie-glace suivant la revendication 6, caractérisée en ce que le levier de manivelle (1) est pourvu de nervures/ailettes de raidissement (16, 17) dans la zone de la partie coudée et contre-coudée.

6. Manivelle d'entraînement pour système d'essuie-glace suivant l'une des revendications précédentes, caractérisée en ce que le levier de manivelle (1) est plus large dans la zone de l'ouverture (4) située à sa première extrémité que dans la zone de l'ouverture (7) située à son autre extrémité et va en rétrécissant d'une manière continue ou étagée dans la zone intermédiaire.

7. Manivelle d'entraînement pour système d'essuie-glace suivant l'une des revendications précédentes, caractérisée en ce que le levier de manivelle (1) comporte des réductions d'épaisseur de matière ou des découpes (18) dans des zones qui ne sont soumises à aucune contrainte mécanique ou ne sont soumises qu'à de faibles contraintes mécaniques.

8. Système d'essuie-glace comportant une manivelle d'entraînement suivant l'une des revendications précédentes.
